# EUROPEAN PATENT APPLICATION

(11) **EP 3 413 614 A1**
(43) Date of publication of application: **12.12.2018**
(21) Application number: 17747492.1
(22) Date of filing: 02.02.2017
(51) Int. Cl.: H04W 24/10, H04W 16/14, H04W 72/04, H04W 72/12

(54) **USER TERMINAL, WIRELESS BASE STATION, AND WIRELESS COMMUNICATION METHOD**

(30) Priority: 04.02.2016 JP 2016020013
(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP); WANG, Lihui, Beijing 100190 (CN); LIU, Liu, Beijing 100190 (CN); JIANG, Huiling, Beijing 100190 (CN)
(74) Representative: Hoffmann Eitle
(86) International application number: PCT/JP2017/003698
(87) International publication number: WO 2017/135340

(57) **Abstract**

The present invention is designed so that aperiodic CSI from user terminals in cells (for example, unlicensed band cells) where listening is performed before transmission can be reported in a timely manner. A user terminal according to one aspect of the present invention has a receiving section that receives a UL grant that allocates an uplink shared channel, and a control section that controls transmission of aperiodic CSI, using the uplink shared channel, based on the CSI request field value included in the UL grant. When the receiving section receives the above UL grant in an unlicensed CC, the control section transmits the aperiodic CSI, in a licensed CC, based on the CSI request field value.

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, the specifications of LTE-A (also referred to as LTE-advanced, LTE Rel. 10, 11 or 12) have been drafted for further broadbandization and increased speed beyond LTE (also referred to as LTE Rel. 8 or 9), and successor systems of LTE (also referred to as, for example, FRA (Future Radio Access), 5G (5th generation mobile communication system), LTE Rel. 13 and so on) are under study.

The specifications of Rel. 8 to 12 LTE have been drafted assuming exclusive operations in frequency bands that are licensed to operators -- that is, licensed bands. As licensed bands, for example, 800 MHz, 1.7 GHz and 2 GHz are used.

In recent years, user traffic has been increasing steeply following the spread of high-performance user terminals (UE: User Equipment) such as smart-phones and tablets. Although more frequency bands need to be added to meet this increasing user traffic, licensed bands have limited spectra (licensed spectra).

Consequently, a study is in progress with Rel. 13 LTE to enhance the frequencies of LTE systems by using bands of unlicensed spectra (also referred to as "unlicensed bands") that are available for use apart from licensed bands (see non-patent literature 2). For unlicensed bands, for example, the 2.4 GHz band and the 5 GHz band, where Wi-Fi (registered trademark) and Bluetooth (registered trademark) can be used, are under study for use.

To be more specific, with Rel. 13 LTE, a study is in progress to execute carrier aggregation (CA) between licensed bands and unlicensed bands. Communication that is carried out by using unlicensed bands with licensed bands like this is referred to as "LAA" (License-Assisted Access). Note that, in the future, dual connectivity (DC) between licensed bands and unlicensed bands and stand-alone in unlicensed bands may become the subject of study under LAA.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: AT&T, Drivers, Benefits and Challenges for LTE in Unlicensed Spectrum, 3GPP TSG-RAN Meeting #62 RP-131701

### Summary of Invention

### Technical Problem

Aperiodic CSI reporting, in which a radio base station requests transmission of channel state information (CSI) using transmission command information (for example, CSI request field) (hereinafter referred to as "uplink (UL) grant") in downlink control information (DCI) for allocating an uplink shared channel (PUSCH: Physical Uplink Shared Channel), and in which a user terminal transmits CSI based on the transmission command information, using the uplink shared channel, is supported in licensed band cells. The CSI reported in aperiodic CSI reporting is also referred to as "aperiodic CSI (A-CSI)."

Unlicensed band cells, in which, for example, pre-transmission listening is employed, are likely to have different communication characteristics than licensed band cells. Therefore, even if aperiodic CSI reporting, which is supported in license band cells, is applied to unlicensed band cells on an as-is basis, user terminals may not be able to report aperiodic CSI in a timely manner.

The present invention has been made in view of the above, and it is therefore an object of the present invention to provide a user terminal, a radio base station and a radio communication method, whereby aperiodic CSI from user terminals within cells where listening is executed prior to transmission (for example, licensed band cells) can be reported in a timely manner.

### Solution to Problem

According to one aspect of the present invention, a user terminal has a receiving section that receives downlink control information that allocates an uplink shared channel, and a control section that controls transmission of channel state information using the uplink shared channel based on transmission command information included in the downlink control information, and, in this user terminal, when the receiving section receives the downlink control information in a first cell in which listening is performed prior to transmission, the control section determines, based on the transmission command information, that the channel state information is transmitted in a second cell, in which listening is not performed prior to transmission.

### Advantageous Effects of Invention

According to the present invention, aperiodic CSI from user terminals in cells (for example, unlicensed band cells) where listening is performed before transmission can be reported in a timely manner.

### Brief Description of Drawings

FIG. 1 is a diagram to show an examples of the CSI request field:
FIGs. 2A and 2B are diagrams to show examples of aperiodic CSI reporting in an LAA system:
FIG. 3 is a diagram to show another example of aperiodic CSI reporting in an LAA system:
FIG. 4 is a diagram to show an example of a PUSCH layer configuration:
FIGs. 5A and 5B are diagrams to show examples of semi-static linking according to a first example:
FIGs. 6A and 6B are diagrams to show examples of dynamic linking according to the first example;
FIGs. 7A and 7B are diagrams to show other examples of dynamic linking according to the first example:
FIG. 8 is a diagram to show a first example of transmission of aperiodic CSI reporting according to the first example:
FIGs. 9A, 9B, and 9C are diagrams to show a first example of mapping of aperiodic CSI according to the first example:
FIG. 10 is a diagram to show a second example of mapping of aperiodic CSI according to the first example:
FIG. 11 is a diagram to show a third example of mapping of aperiodic CSI according to the first example:
FIG. 12A and 12B are diagrams to show a second example of transmission of aperiodic CSI reporting according to the first example:
FIGs. 13A and 13B are diagrams to show a fourth example of mapping of aperiodic CSI according to the first example:
FIG. 14 is a diagram to show an example of aperiodic CSI reporting according to a second example:
FIG. 15 is a diagram to show an example of a schematic structure of a radio communication system according to the present embodiment;
FIG. 16 is a diagram to show an example of an overall structure of a radio base station according to present embodiment;
FIG. 17 is a diagram to show an example of a functional structure of a radio base station according to present embodiment;
FIG. 18 is a diagram to show an example of an overall structure of a user terminal according to present embodiment;
FIG. 19 is a diagram to show an example of a functional structure of a user terminal according to present embodiment; and
FIG. 20 is a diagram to show an example hardware structure of a radio base station and a user terminal according to the present embodiment.

### Description of Embodiments

As mentioned earlier, in systems that run LTE/LTE-A in unlicensed bands (for example, LAA systems), interference control functionality is likely to be necessary in order to allow co-presence with other operators' LTE, Wi-Fi, or other different systems. Note that systems that run LTE/LTE-A in unlicensed bands may be collectively referred to as "LAA," "LAA-LTE," "LTE-U," "U-LTE" and so on, regardless of whether the mode of operation is CA, DC or SA.

Generally speaking, when a transmission point (for example, a radio base station (eNB), a user terminal (UE) and so on) that communicates by using a carrier (which may also be referred to as a "carrier frequency," or simply a "frequency") of an unlicensed band detects another entity (for example, another user terminal) that is communicating in this unlicensed band carrier, the transmission point is disallowed to make transmission in this carrier.

Therefore, the transmission point performs listening (LBT: Listen Before Talk) at a timing a predetermined period ahead of a transmission timing. To be more specific, by executing LBT, the transmission point searches the whole of the target carrier band (for example, one component carrier (CC)) at a timing that is a predetermined period ahead of a transmission timing, and checks whether or not other devices (for example, radio base stations, user terminals, Wi-Fi devices and so on) are communicating in this carrier band.

Note that, in the present description, "listening" refers to the operation which a given transmission point (for example, a radio base station, a user terminal, etc.) performs before transmitting signals in order to check whether or not signals to exceed a predetermined level (for example, predetermined power) are being transmitted from other transmission points. Further, the listening performed by radio base stations and/or user terminals may be referred to as "LBT," "CCA" (Clear Channel Assessment), "carrier sensing," or the like.

The transmission point then carries out transmission using this carrier only if it is confirmed that no other devices are communicating. If the received power measured during LBT (the received signal power during the LBT period) is equal to or lower than a predetermined threshold, the transmission point judges that the channel is in the idle state (LBTidle), and carries out transmission. When a "channel is in the idle state," this means that, in other words, the channel is not occupied by a specific system, and it is equally possible to say that a channel is "idle," a channel is "clear," a channel is "free," and so on.

On the other hand, if only just a portion of the target carrier band is detected to be used by another device, the transmission point stops its transmission. For example, if the transmission point detects that the received power of a signal from another device entering this band exceeds a threshold, the transmission point judges the channel is in the busy state (LBTbusy), and makes no transmission. In the event LBTbusy is yielded, LBT is carried out again with respect to this channel, and the channel becomes available for use only after it is confirmed that the channel is in the idle state. Note that the method of judging whether a channel is in the idle state/busy state based on LBT is by no means limited to this.

As LBT mechanisms (schemes), FBE (Frame Based Equipment) and LBE (Load Based Equipment) are currently under study. Differences between these include the frame configurations to use for transmission/receipt, the channel-occupying time, and so on. In FBE, the LBT-related transmitting/receiving configurations have fixed timings. Also, LBE, in which the LBT-related transmitting/receiving configurations are not fixed in the time direction, and in which LBT is carried out on an as-needed basis, is also referred to as "category 4" and so on. Note that when transmission is performed without LBT, it is also called" category 1."

To be more specific, FBE has a fixed frame cycle, and is a mechanism of carrying out transmission if the result of executing carrier sensing for a certain period (which may be referred to as "LBT duration" and so on) in a predetermined frame shows that a channel is available for use, and not making transmission but waiting until the next carrier sensing timing if no channel is available.

On the other hand, LBE refers to a mechanism for implementing the ECCA (Extended CCA) procedure of extending the duration of carrier sensing when the result of carrier sensing (initial CCA) shows that no channel is available for use, and continuing executing carrier sensing until a channel is available. In LBE, random backoff is required to adequately avoid contention.

Note that the duration of carrier sensing (also referred to as the "carrier sensing period") refers to the time (for example, the duration of one symbol) it takes to gain one LBT result by performing listening and/or other processes and deciding whether or not a channel can be used.

A transmission point can transmit a predetermined signal (for example, a channel reservation signal) based on the result of LBT. Here, the result of LBT refers to information about the state of channel availability (for example, "LBTidle," "LBTbusy," etc.), which is acquired by LBT in carriers where LBT is configured.

Also, when a transmission point starts transmission when the LBT result shows the idle state (LBTidle), the transmission point can skip LBT and carry out transmission for a predetermined period (for example, for 10 to 13 ms). This transmission is also referred to as "burst transmission," "burst," "transmission burst," and so on.

As described above, by introducing interference control that is based on LBT mechanism and that is for use within the same frequency to transmission points in LAA systems, it becomes possible to prevent interference between LAA and Wi-Fi, interference between LAA systems and so on. Furthermore, even when transmission points are controlled independently per operator that runs an LAA system, LBT makes it possible to reduce interference without learning the details of each operator's control.

Also, in LAA systems, user terminals performs RRM (Radio Resource Management) measurements to detect unlicensed band cells (SCells: Secondary Cells) (including RSRP (Reference Signal Received Power) measurements, etc.). As a signal for making RRM measurements, the discovery reference signal (DRS) is under study for use.

The DRS for use in LAA systems may be formed by including at least one of synchronization signals (PSS (Primary Synchronization Signal)/SSS (Secondary Synchronization Signal)), a cell-specific reference signal (CRS) and a channel state information reference signal (CSI-RS). The DRS is transmitted in a DMTC duration of a predetermined periodicity (also referred to as the "DMTC (Discovery Measurement Timing Configuration) periodicity")). Note that this DRS may be referred to as a "detection signal," a "detection measurement signal," a "discovery signal" (DS), an "LAA DRS," an "LAA DS," or the like.

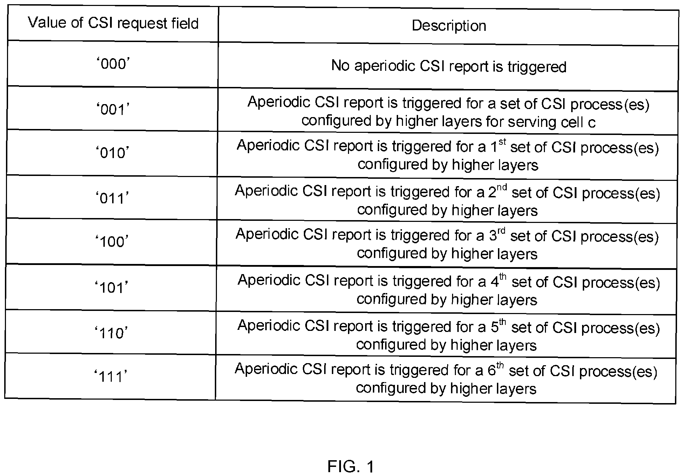

In addition, in LAA systems, the user terminal measures CSI by using the CRS and/or the CSI-RS (hereinafter "CRS/CSI-RS") transmitted in unlicensed band cells, and reports the measurement result to the radio base station (CSI reporting). Note that, the CRS may be the CRS included in each subframe in which downlink transmission is performed, or may be the CRS that constitutes the DRS (see FIGs. 1A and 1B, for example). Further, the CSI-RS is a CSI-RS that is transmitted in a predetermined cycle (for example, 5 ms, 10 ms, etc.), and configured apart from the CSI-RS constituting the DRS.

Such CSI reporting may be periodic (periodic CSI reporting) or aperiodic (aperiodic CSI reporting). In aperiodic CSI reporting, the radio base station requests transmission of CSI by using transmission command information (for example, CSI request field) in PUSCH-allocating DCI (also referred to as "UL grant," "DCI format 0/4," etc., hereinafter referred to as "UL grant"). In aperiodic CSI reporting, the user terminal transmits CSI using the PUSCH based on the transmission command information in UL grants. CSI reported in aperiodic CSI reporting is also referred to as "aperiodic CSI"(A-CSI).

FIG. 1 is a diagram to show an example of the CSI request field. As shown in FIG. 1, when the value of a 3-bit CSI request field (hereinafter referred to as the "CSI request field value") is "000," aperiodic CSI reporting is not requested. When the CSI request field value is "001," for a serving cell c, aperiodic CSI reporting for the CSI process set configured by higher layer signaling is requested. Also, if the CSI request field value is "010" to "111," aperiodic CSI reporting for the first through sixth CSI process sets configured by higher layer signaling is required.

Here, a CSI process set is a collection of one or more CSI processes. Also, in each cell, one or more CSI processes are configured. Each CSI process is linked to a CRS resource or a CSI-RS resource and a CSI-IM (Interference measurement) resource. In the following description, a given cell's CSI may mean the CSI of one or more CSI processes of the cell. Also, a CSI process set may include CSI processes of different cells.

Further, a cell may be a license band cell and/or an unlicensed band cell. A cell is also referred to as a "component carrier" (CC) or a "carrier." For example, a licensed band cell is referred to as a "licensed CC," a "PCell," an "SCell," a "licensed carrier," and so on. In addition, unlicensed band cells are referred to as "unlicensed CCs," "LAA Scells," "LAA carriers," "unlicensed carriers" and so on. Hereinafter, license band cells will be referred to as "licensed CCs," and unlicensed band cells will be referred to as "unlicensed CCs."

Note that the CSI request field is not limited to that shown in FIG. 1. The value of the CSI request field may represent an aperiodic CSI reporting request, which is the pair of {CSI process, CSI subframe set}, configured by the above CSI process set and/or higher layer signaling. Also, the value of the CSI request field may indicate an aperiodic CSI reporting request for the serving cell set (one or more serving cells) that is configured via higher layer signaling. Also, the CSI request field is not limited to three bits, and may be one bit or two bits, or four bits or more.

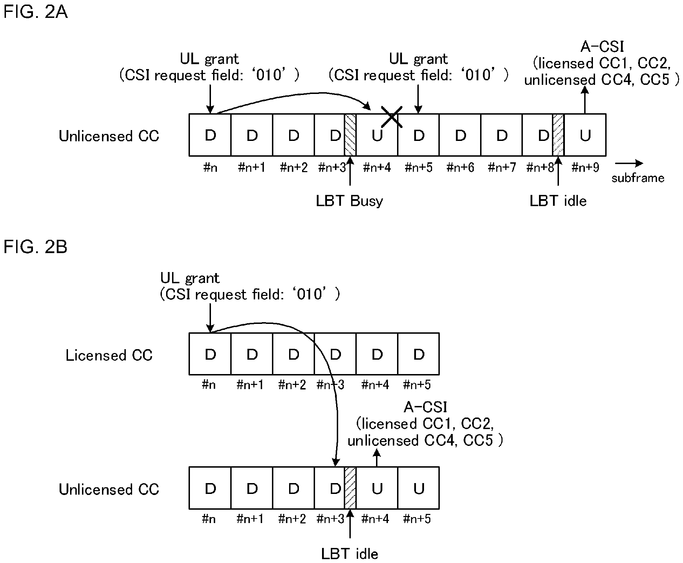

FIGs. 2 provide diagrams to show examples of aperiodic CSI reporting in an LAA system. Note that, in FIG. 2, both downlink transmission and uplink transmission are supported in unlicensed CCs. Further, "D" and "U" in FIGs. 2 stand for subframes for downlink transmission and subframes for uplink transmission, respectively. Note that uplink transmission may be performed in some of the symbols also in subframes for downlink transmission. Similarly, downlink transmission may be performed in some of the symbols in uplink transmission subframes.

FIG. 2A shows a case where a UL grant to which the PUSCH of the unlicensed CC (self carrier scheduling) is allocated is transmitted in the unlicensed CC. For example, in FIG. 2A, the user terminal receives a UL grant including the CSI request field value "010" in subframe #n. As explained in FIG. 1, the CSI request field value "010" requests transmission of the aperiodic CSI carrier of the first CSI process set. Here, the CSI processes of the licensed CC 1 and the licensed CC 2 and the CSI processes of the unlicensed CC 4 and the licensed CC 5 are configured as the first CSI process set by higher layer signaling.

In FIG. 2A, the user terminal performs LBT (listening) before transmitting the PUSCH allocated by the UL grant including the CSI request field value "010" (for example, just before subframe #n + 4). However, if the result of this LBT indicates the busy state, the user terminal cannot transmit the aperiodic CSI of the first CSI process set using this PUSCH.

As shown in FIG. 2A, if the aperiodic CSI cannot be transmitted because the LBT result indicates a busy state, it is not permitted to transmit this aperiodic CSI in another subframe or another cell (for example, a licensed CC). Therefore, in subframe #n + 5, the radio base station re-transmits the UL grant including the CSI request field value "010," and waits for an aperiodic CSI report according to the result of LBT. Note that, in FIG. 2A, the result of LBT before the PUSCH allocated by the UL grant of subframe #n + 5 is transmitted indicates the idle state, and therefore the aperiodic CSI of the first CSI process set is reported using the PUSCH.

FIG. 2B shows a case where a UL grant to allocate a PUSCH of an unlicensed CC is transmitted in a licensed CC (cross-carrier scheduling). For example, in FIG. 2B, the user terminal receives a UL grant including the CSI request field value "001" in subframe #n of a licensed CC. As explained in FIG. 1, the CSI request field value "001" requests transmission of the aperiodic CSI of the CSI process set of the serving cell (cell where the PUSCH is allocated, and, here, an unlicensed CC).

In FIG. 2B, the user terminal performs LBT (listening) before transmitting the PUSCH allocated by the UL grant including the CSI request field value "010" (for example, just before subframe #n + 4). In FIG. 2B, the result of this LBT indicates an idle state, so that, using this PUSCH, the aperiodic CSI of the CSI process set of the unlicensed CC where this PUSCH is transmitted is reported.

In this way, when aperiodic CSI transmission using the PUSCH of an unlicensed CC is requested (when a predetermined CSI request field value is included in a UL grant that allocates an unlicensed CC's PUSCH), whether or not this aperiodic CSI can be reported depends on the result of LBT before the PUSCH of this unlicensed CC is transmitted.

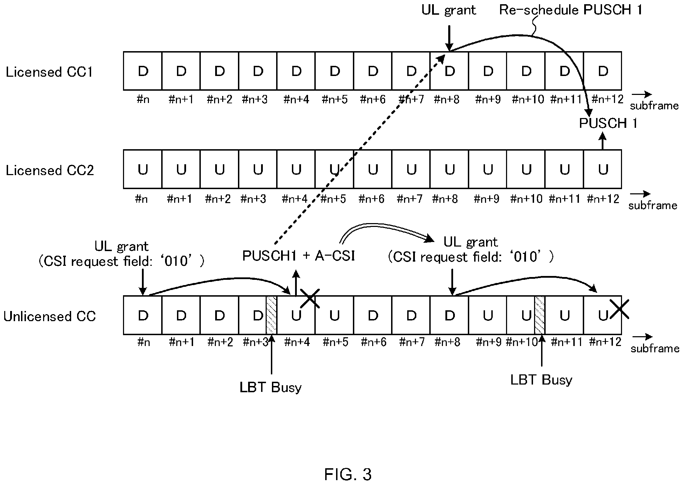

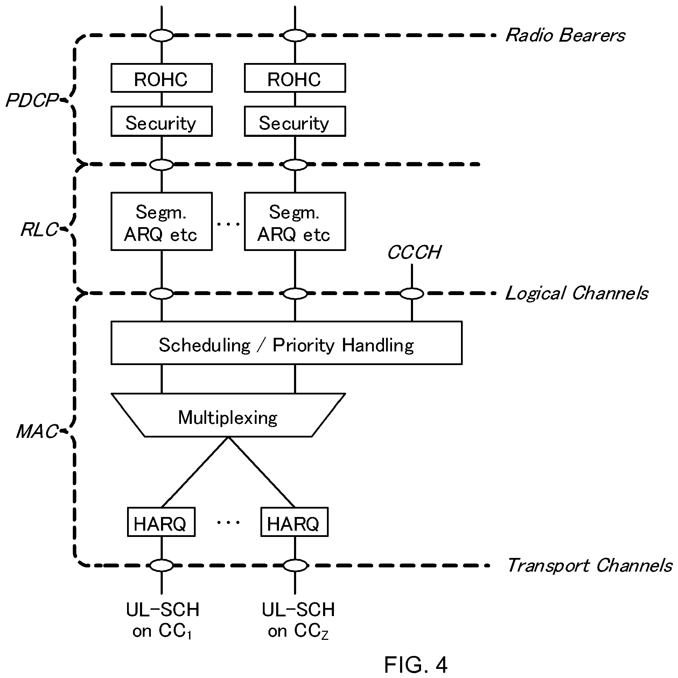

FIG. 3 is a diagram to show another example of aperiodic CSI reporting in an LAA system. FIG. 4 is a diagram to show an example of a PUSCH layer configuration. FIG. 3 assumes that the user terminal receives a UL grant to allocate PUSCH 1 of an unlicensed CC in subframe #n and that this UL grant includes the CSI request field value "010." In this case, if result of LBT before the PUSCH 1 is transmitted indicates a busy state, the PUSCH 1 is rescheduled in the licensed CC 2 by a UL grant by the licensed CC 1 and transmitted in the licensed CC 2.

On the other hand, aperiodic CSI, commanded to be transmitted by a UL grant that assigns an unlicensed CC's PUSCH, is not rescheduled to a licensed CC. Therefore, as shown in FIG. 3, if the busy state in an unlicensed CC continues, aperiodic CSI reporting may continue being blocked, and aperiodic CSI may not be reported in a timely manner. For example, in FIG. 3, although transmission of aperiodic CSI that could not be transmitted in subframe #n + 4 is again requested by the UL grant of subframe #n + 8, since the LBT result before transmission of the PUSCH allocated by the UL grant also indicates a busy state, the user terminal cannot transmit aperiodic CSI.

Thus, when the result of LBT before the PUSCH assigned to an unlicensed CC is transmitted indicates a busy state, unlike user data (PUSCH 1), aperiodic CSI is not rescheduled in a licensed CC, and therefore the reporting timing may be delayed.

As described above, when the user terminal transmits aperiodic CSI using the PUSCH of an unlicensed CC, depending on the result of LBT, the aperiodic CSI may not be reported in a timely manner. On the other hand, if the user terminal transmits aperiodic CSI using the PUSCH of a licensed CC, which is not dependent on the result of LBT, the problem that aperiodic CSI cannot be reported in a timely manner because the result of LBT shows a busy state does not occur.

Therefore, the present inventors have paid attention to the fact that, if aperiodic CSI is reported using the PUSCH of a licensed CC, aperiodic CSI can be reported irrespective of the result of LBT, and thereupon arrived at the present invention. To be more specific, the present inventors have come up with the ideas of decoupling a cell that requests aperiodic CSI transmission (triggering cell) and the cell where the aperiodic CSI is reported (reporting cell) (first example), and invalidating the request for aperiodic CSI transmission using the PUSCH of an unlicensed CC (second example).

Now, embodiments of the present invention will be described below in detail with reference to the accompanying drawings. Although the following embodiment will be described assuming that a cell (first cell) where pre-transmission listening is configured is an unlicensed CC, this is by no means limiting. This embodiment can be applied to any cell where pre-transmission listening is configured, regardless of whether this cell is a licensed CC or an unlicensed CC.

Further, in this embodiment, a cell in which listening before transmission is not configured (second cell) will be described as a licensed CC. This licensed CC may be either a PCell, an SCell or a PSCell, as long as it is a licensed band cell.

Further, in the present embodiment, it is assumed that CA or DC between a cell in which listening before transmission (second cell) is not configured and a cell in which listening before transmission is configured (first cell) is applied, but the present invention is not limited to this. For example, the present embodiment is applicable to cases where a user terminal is connected, in stand-alone, to a cell (first cell) in which listening is configured.

In the present embodiment, an example to use a 3-bit CSI request field as aperiodic CSI transmission command information will be described, but the present invention is not limited to this. The number of bits of the CSI request field may be one bit, two bits, four bits or more. Also, the contents to be represented by CSI request field values are not limited to those shown in FIG. 1.

### (First Example)

In the first example, a triggering cell to request transmission of aperiodic CSI and a reporting cell where this aperiodic CSI is reported are decoupled. The relationship between the triggering cell and the reporting cell is semi-statically or dynamically reported to the user terminal.

Also, in the first example, the triggering cell is an unlicensed CC and the reporting cell is an unlicensed CC. To be more specific, when a UL grant for allocating the PUSCH (downlink control information) is received in an unlicensed CC (first cell), based on the CSI request field value (transmission command information) included in this UL grant, the user terminal transmits aperiodic CSI (channel state information), using the PUSCH, in a licensed CC (second cell).

Here, the unlicensed CC being the triggering cell and the licensed CC being the reporting cell are linked. The user terminal transmits aperiodic CSI based on the CSI request field value in a UL grant, in a licensed CC that is linked to the unlicensed CC in which the UL grant is received. Thus, by linking the triggering cell and the reporting cell are linked, it becomes possible to transmit aperiodic CSI in the reporting cell without separately transmitting a UL grant to allocate the PUSCH in the reporting cell. Hereinafter, semi-static or dynamic linking between the triggering cell and the reporting cell will be described in detail.

### <Semi-static linking>

When the triggering cell and the reporting cell are semi-statically linked, the user terminal may receive higher layer control information (for example, control information and broadcast information provided via RRC signaling) indicating the reporting cell linked to the triggering cell. The user terminal may transmit aperiodic CSI based on the CSI request field value included in a UL grant received in the triggering cell, in the reporting cell indicated by higher layer control information.

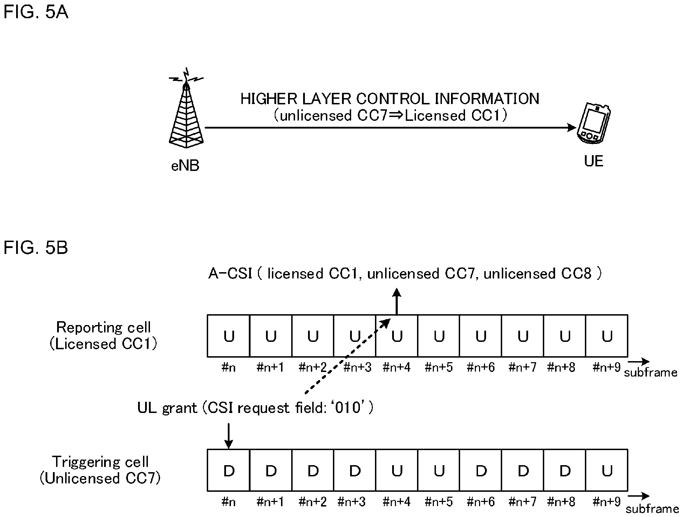

FIGs. 5 provide diagrams to show an example of semi-static linking between a triggering cell and a reporting cell according to the first example. In FIG. 5, the unlicensed CC 7 is the triggering cell and the licensed CC 1 is the reporting cell, but the present invention is not limited to this. In FIGs. 5, the CSI processes of the licensed CC 1, the unlicensed CC 7 and the unlicensed CC 8 are configured as the first CSI process set by higher layer signaling.

As shown in FIG. 5A, the radio base station transmits higher layer control information, to the user terminal, indicating that the aperiodic CSI triggered by the unlicensed CC 7 is to be reported in the licensed CC 1 -- that is, indicating that the licensed CC 1 is linked, as a reporting cell, to the unlicensed CC 7, which is the triggering cell.

As shown in FIG. 5B, the user terminal receives a UL grant, including the CSI request field value "010," in the unlicensed CC 7. The CSI request field value "010" requests transmission of the aperiodic CSI of the first CSI process set (see FIG. 1). In the licensed CC 1 linked to the unlicensed CC 7, the user terminal transmits aperiodic CSI of the CSI processes of the licensed CC 1, the unlicensed CC 7 and the unlicensed CC 8, configured as the first CSI process set.

### <Dynamic linking>

When the triggering cell and the reporting cell are dynamically linked, the user terminal may receive a UL grant including linkage information (for example, linkage field) indicating the reporting cell linked to the triggering cell. In the reporting cell indicated by the linkage information, the user terminal may transmit aperiodic CSI based on the CSI request field value included in a UL grant received in the triggering cell.

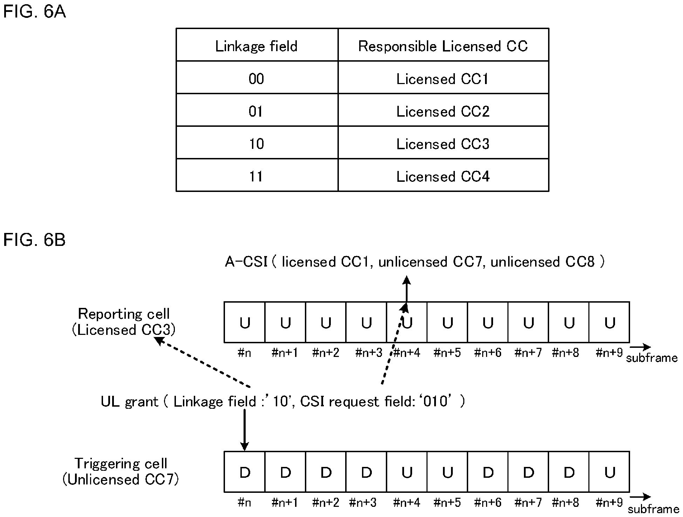

FIGs. 6 provide diagrams to show an example of dynamic linking between a triggering cell and a reporting cell according to the first example. In FIG. 6, the unlicensed CC 7 is the triggering cell. In FIG. 6, the CSI processes of the licensed CC 1, the unlicensed CC 7 and the unlicensed CC 8 are configured as the first CSI process set by higher layer signaling.

As shown in FIG. 6A, in the linkage field included in a UL grant, each value indicates a reporting cell linked to a triggering cell (here, the unlicensed CC 7). For example, the linkage field values "00," "01," "10," and "11" in FIG. 6A correspond to the licensed CC 1, the licensed CC 2, the licensed CC 3 and the licensed CC 4.

In FIG. 6A, each linkage field value indicating a reporting cell may be a fixed value or may be configured by higher layer signaling. Further, in FIG. 6A, a 2-bit linkage field is used, but the present invention is not limited thereto. The number of bits in the linkage field may be one bit, or may be three bits or more.

As shown in FIG. 6B, the user terminal receives, in the unlicensed CC 7, a UL grant, which includes the linkage field value "10," and the CSI request field value "010," which requests transmission of aperiodic CSI of the first CSI process set. As shown in FIG. 6A, the linkage field value "10" indicates that the licensed CC 3 is the reporting cell linked to the unlicensed CC 7. In FIG. 6B, the user terminal transmits aperiodic CSI of the CSI processes of the licensed CC 1, the unlicensed CC 7 and the unlicensed CC 8, configured as the first CSI process set, in the licensed CC 3, which is designated by the linkage field value "10."

As shown in FIG. 6, when linkage information (for example, linkage field) indicating the reporting cell linked to the triggering cell is newly included in a UL grant, the reporting cell can be changed dynamically, so that aperiodic CSI can be reported in a more appropriate licensed CC.

Alternatively, if the triggering cell and the reporting cell are dynamically linked, the user terminal may receive a UL grant that contains a CSI request field indicating the reporting cell linked to the triggering cell. The user terminal may transmit aperiodic CSI of the triggering cell in the reporting cell indicated by the CSI request field value.

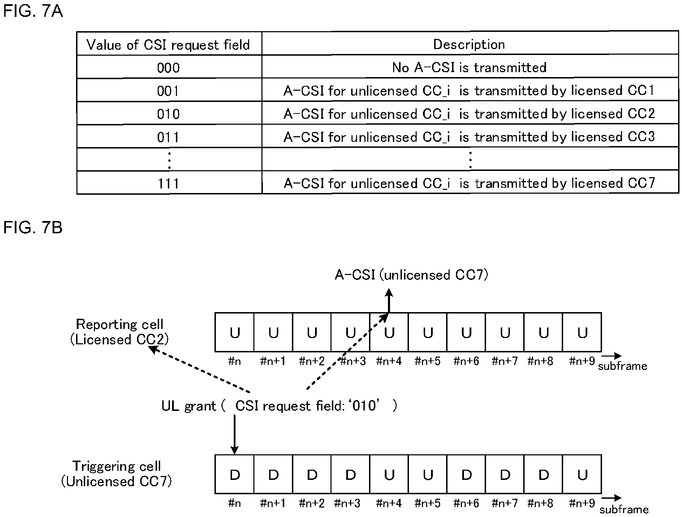

FIG. 7 is a diagram to show another example of dynamic linking between a triggering cell and a reporting cell according to the first example. In FIG. 7, the unlicensed CC 7 is the triggering cell.

In FIG. 7A, an example of the CSI request field in a UL grant is shown. The CSI request field values "001" to "111" in FIG. 1 indicate which cells and/or which CSI processes aperiodic CSI that is reported pertains to. Meanwhile, the CSI request field values "001" to "111" in FIG. 7A indicate the reporting cell to be the recipient of aperiodic CSI that is reported from the triggering cell (unlicensed CCi). Thus, the CSI request field values of FIG. 7A represent different contents than the CSI request field values of FIG. 1.

For example, the CSI request field value "001" in FIG. 7A indicates that aperiodic CSI of the triggering cell (here, the unlicensed CC 7) is transmitted in the licensed CC 1 (that is, the licensed CC 1 is the reporting cell). Likewise, the values "010" to "111" of the CSI request field indicate that aperiodic CSI of the triggering cell is transmitted in the licensed CC 2 to CC 7 (that is, the licensed CC 2 to CC 7 are the reporting cells).

Note that, as shown in FIG. 7A, how to read and interpret the contents indicated by the CSI request field values may be configured by higher layer signaling. In addition, each CSI request field value to indicate a reporting cell in FIG. 7A may be a fixed value or may be configured by higher layer signaling. Further, in FIG. 7A, a 3-bit CSI request field is used, but the present invention is not limited thereto. The number of bits in the CSI request field may be one bit or two bits, or may be four bits or more.

As shown in FIG. 7B, the user terminal receives a UL grant including the CSI request field value "010" in the unlicensed CC 7. As shown in FIG. 7A, the CSI request field value "010" indicates that the licensed CC 2 is the reporting cell. The user terminal transmits aperiodic CSI of the unlicensed CC 7, which is the triggering cell, in the licensed CC 2 designated by the CSI request field value "010."

As shown in FIG. 7, if a triggering cell and a reporting cell of aperiodic CSI reporting are dynamically linked by interpreting the CSI request field value in a UL grant, it is possible to change the reporting cell dynamically, without increasing the number of UL grant bits. For this reason, aperiodic CSI with a more appropriate licensed CC without introducing a new DCI format.

### <When aperiodic CSI is transmitted in reporting cell>>

As described above, when aperiodic CSI is transmitted in a reporting cell that is semi-statically or dynamically linked to a triggering cell, when a radio base station transmits a UL grant including a CSI request field in a triggering cell, the resource for PUSCH transmission (hereinafter referred to as "PUSCH resource") in the triggering cell and/or the PUSCH resource in the reporting cell may be reserved.

Here, the PUSCH resource in the reporting cell is reported to the user terminal using a predetermined field (for example, the resource allocation field) in a UL grant transmitted in the triggering cell. For example, when the PUSCH resource in the reporting cell is reported using the resource allocation field in a UL grant that is transmitted in the triggering cell, PRBs of the same index are assigned as PUSCH resources in the reporting cell and the triggering cell.

Alternatively, the PUSCH resource in the triggering cell may be reported using the resource allocation field in a UL grant transmitted in the triggering cell, and the PUSCH resource in the reporting cell may be reported using another field in the UL grant. In this case, PRBs with the same index may be allocated as PUSCH resources in the reporting cell and triggering cell, or PRBs of different indices may be allocated.

In this way, when the PUSCH resources of the triggering cell and the reporting cell are reserved when a UL grant including a CSI request field is transmitted in the triggering cell, the user terminal may transmit periodic CSI using the PUSCH allocated to the reporting cell, and transmit user data using the PUSCH allocated in the triggering cell.

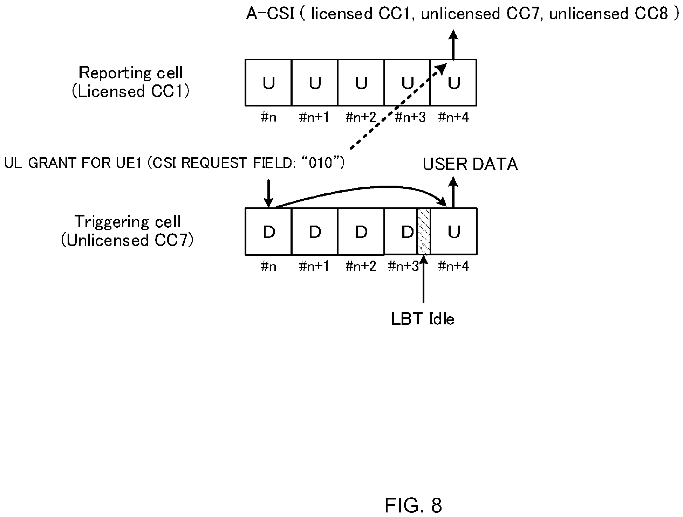

FIG. 8 is a diagram to show a first example of transmission of aperiodic CSI and user data according to the first example. In FIG. 8, the unlicensed CC 7 is the triggering cell, and the licensed CC 1, linked to the unlicensed CC 7, is the reporting cell. In FIG. 8, the CSI processes of the licensed CC 1, the unlicensed CC 7 and the unlicensed CC 8 are configured as the first CSI process set by higher layer signaling.

In FIG. 8, when a UL grant including the CSI request field value "010" is transmitted in the unlicensed CC 7, which is the triggering cell, the radio base station secures both the PUSCH resource of the unlicensed CC 7, and the PUSCH resource of the licensed CC 1, which linked to the licensed CC 7. The radio base station includes allocation information indicating the PUSCH resources to be allocated in the unlicensed CC 7 and the licensed CC 1, in a UL grant that is transmitted in the unlicensed CC 7.

The user terminal receives a UL grant, including PUSCH allocation information in the unlicensed CC 7 and the licensed CC 1, and the CSI request field value "010," in subframe #n of the unlicensed CC 7. The user terminal transmits aperiodic CSI of the first CSI process set using the PUSCH allocated to the licensed CC 1, which is the reporting cell.

Meanwhile, the user terminal performs LBT before transmitting the PUSCH allocated in the unlicensed CC 7, which is the triggering cell (for example, in FIG. 8, just before subframe #n + 4). As shown in FIG. 8, when the result of LBT indicates the idle state, the user terminal transmits user data using the PUSCH allocated in the unlicensed CC 7.

Note that in FIG. 8, when there is no user data to be transmitted from the user terminal, the radio base station secures the PUSCH resource for the reporting cell, and does not have to secure the PUSCH resource for the triggering cell. In this case, the radio base station may transmit PUSCH resource allocation information pertaining to the reporting cell, and a UL grant including a CSI request field, in triggering cell. The user terminal transmits aperiodic CSI using the PUSCH assigned to the reporting cell, and does not transmit user data.

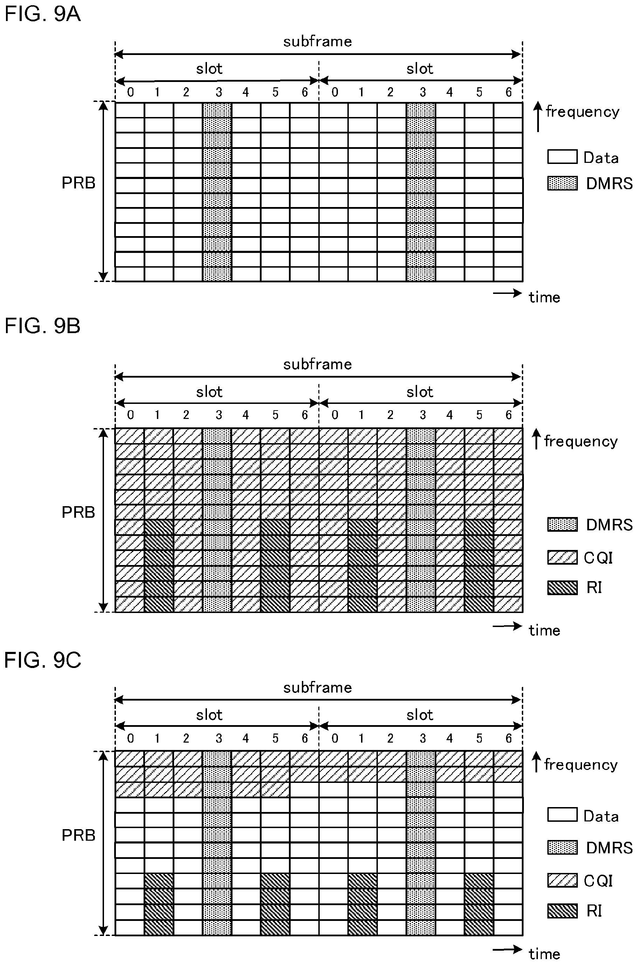

FIG. 9 is a diagram to show a first example of mapping of aperiodic CSI and user data according to the first example. In FIG. 9A, an example of mapping of user data transmitted using the PUSCH of the triggering cell of FIG. 8 is shown. In FIGs. 9B and 9C, examples of mapping of aperiodic CSI transmitted using the PUSCH of the reporting cell of FIG. 8 is shown.

As shown in FIG. 9A, when user data is transmitted using the triggering cell's PUSCH, the user terminal maps user data (PUSCH) to the PUSCH resource (one or more PRBs) indicated by the allocation information in a UL grant received in the triggering cell. For example, in the PUSCH resource, the user terminal maps the demodulation reference signal (DMRS) for user data to all the resource elements (RE) in symbol #3 in each slot, and maps user data to all the REs of the symbols other than symbol #3.

On the other hand, when, as shown in FIG. 9B, aperiodic CSI is transmitted using the reporting cell's PUSCH, the user terminal may map the aperiodic CSI to part or all of the PUSCH resource (one or more PRBs) indicated by the allocation information in a UL grant received in the triggering cell. Here, the aperiodic CSI includes at least one of a rank indicator (RI), a channel quality indicator (CQI) and a precoding matrix indicator (PMI).

For example, as shown in FIG. 9B, in the PUSCH resource, the user terminal may map the DMRS to all the REs in symbol #3 in each slot, map the RI to REs in symbols #1 and #5 in each slot from one end of the frequency field and map the CQI to all the remaining all REs from the other end of the frequency field.

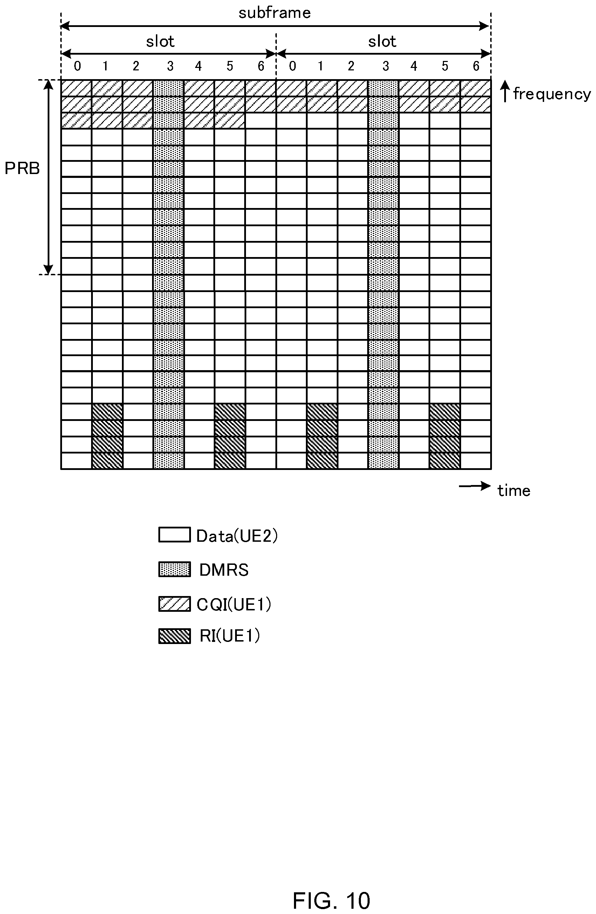

Alternatively, as shown in FIG. 9C, if there are still unused REs even after the CQI is mapped in the PUSCH resource, user data from other user terminals may be mapped to these unused REs. As shown in FIG. 9C, when multiple user terminals' aperiodic CSI and user data are multiplexed in the same PRB. the DMRSs of these multiple user terminals may be multiplexed in symbol #3 (for example, may be orthogonally multiplexed using orthogonal spreading codes). Referring to FIG. 10, an example of mapping user data from other user terminals to unused REs will be described in detail.

FIG. 10 is a diagram to show a second example of mapping of aperiodic CSI according to the first example. In FIG. 10, two identical consecutive PRBs are assigned as PUSCH resources for user terminals 1 and 2. Also, the user terminal 1 is requested to transmit aperiodic CSI.

As explained with reference to FIGs. 9B and 9C, in the two PRBs allocated as PUSCH resources, the user terminal 1 maps the DMRS to all the REs in symbol #3 in each slot, maps the RI to REs in symbols #1 and #5 in each slot from one end of the frequency field, and map the CQI to the remaining REs from the other end of the frequency field. Here, in order to allow the user terminal 2, where the same two PRBs as those of the user terminal 1 are allocated as the PUCCH resource, to map user data to the PUSCH resource, the user terminal 2 needs to know whether or not aperiodic CSI of the user terminal 1 is mapped.

Therefore, even when transmission of aperiodic CSI is not requested, CSI request field values other than "000" (that is, values to request transmission of aperiodic CSI) may be included in a UL grant that allocates the PUSCH to the user terminal 2. In this case, a field (for example, one bit) to indicate whether or not to actually request the user terminal 2 to transmit aperiodic CSI may be added in the UL grant.

When this field value indicates that transmission of aperiodic CSI is not requested (for example, "0"), the user terminal 2 determines that aperiodic CSI from the user terminal 1 is mapped to a predetermined number of REs in the PUSCH resource, and does not map the user data of the user terminal 2 to the predetermined number of REs. Note that a predetermined number of REs may be indicated by control size 2, which is reported to the user terminal 2 by way of, for example, higher layer signaling. Also, control size 2 is configured to be equal to or greater than control size 1, which indicates the number of PRBs where aperiodic CSI of the user terminal 1 is actually mapped.

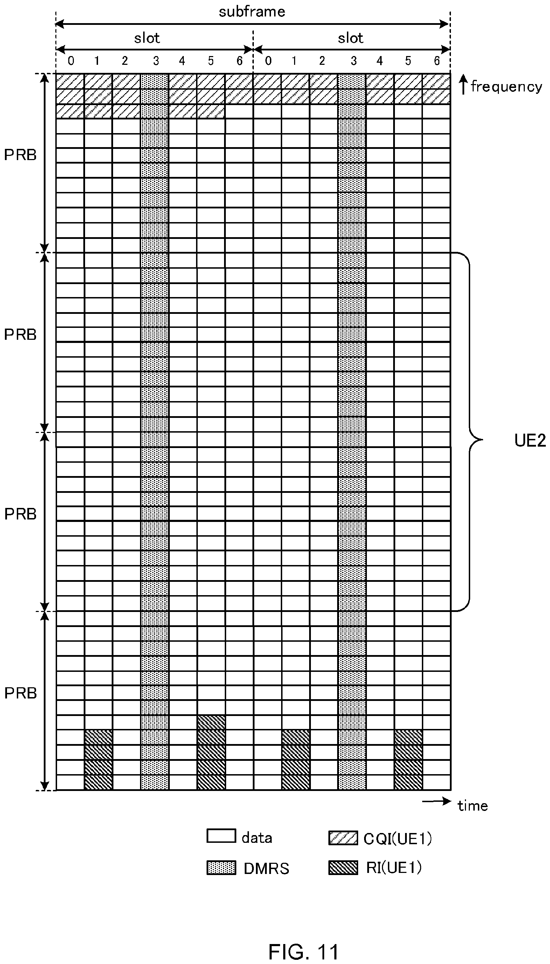

Alternatively, if there are still unused PRBs even after the CQI is mapped in the PUSCH resource, user data from other user terminals may be mapped to these unused PRBs. Referring to FIG. 11, an example of mapping user data from other user terminals to unused REs will be described in detail.

FIG. 11 is a diagram to show a third example of mapping of aperiodic CSI according to the first example. In FIG. 11, four consecutive PRBs are allocated as the PUSCH resource for the user terminal 1. Also, the user terminal 1 is requested to transmit aperiodic CSI.

The user terminal 1 maps the RI to REs of symbols #1 and #5 of each slot from one end of the frequency field, and maps the CQI from the other end of the frequency field to the remaining REs. User terminal 2 maps user data to two PRBs to which aperiodic CSI of user terminal 1 is not mapped.

Here, the user terminal 1 may map the DMRS to symbol #3 of each slot in the two PRBs at both ends where the CQI and the RI are mapped. In this case, the central two PRBs not used by the user terminal 1 are assigned to the user terminal 2 as the PUSCH resource, and are reported by using a UL grant. The user terminal 2 may map the DMRS to symbol #3 of each slot in the two central PRBs. The user terminal 2 recognizes the two central PRBs as the PUSCH resource for the subject terminal, and therefore there is no need to take user data allocation restrictions into account.

Alternatively, the user terminal 1 may map the DMRS to symbol #3 of each slot, not only in the two PRBs at both ends where the CQI and the RI are mapped, but also in the two central PRBs. In this case, the same four PRBs as in the user terminal 1 are also assigned to the user terminal 2 as the PUSCH resource, and are reported in a UL grant. Like the user terminal 1, the user terminal 2 maps DMRS to symbol #3 in each slot of 4 PRBs. Note that the DMRS of the user terminal 1 and the DMRS of the user terminal 2 are multiplexed in symbol #3 of each slot (for example, orthogonally multiplexed using orthogonal spreading codes).

If, as in the latter case, four PRBs are allocated to both user terminals 1 and 2 as PUSCH resources, the user terminal 2 needs to identify the PRBs, in the PUCCH resource, where data allocation is restricted. Therefore, as in the case of reporting REs where allocation is restricted, even if transmission of aperiodic CSI is not requested, CSI request field values other than "000" (that is, values to request transmission of aperiodic CSI) may be included in a UL grant that allocates the PUSCH to the user terminal 2. In this case, a field to indicate whether or not to actually request transmission of aperiodic CSI to the user terminal 2 (for example, one bit) may be added to the UL grant.

When the field value indicates that transmission of aperiodic CSI is not requested (for example, "0"), the user terminal 2 judges that aperiodic CSI from the user terminal 1 is mapped to a predetermined number of PRBs in the PUSCH resource, and does not map the user data of the user terminal 2 to the predetermined number of PRBs. Note that a predetermined number of PRBs may be indicated by control size 2, which his reported to the user terminal 2 by way of higher layer signaling, for example. Also, control size 2 is configured to be equal to or greater than control size 1, which indicates the number of PRBs where aperiodic CSI of the user terminal 1 is actually mapped.

### <When aperiodic CSI and user data are transmitted in reporting cell>>

When aperiodic CSI is transmitted in a reporting cell that is semi-statically or dynamically linked to a triggering cell, the radio base station, when transmitting a UL grant including a CSI request field in the triggering cell, may secure the PUSCH resource in the reporting cell, without securing the PUSCH resource of the triggering cell. The PUSCH resource in the reporting cell is reported to the user terminal using a predetermined field in a UL grant transmitted in the triggering cell.

Thus, when the PUSCH resource of the reporting cell is reserved to transmit a UL grant including a CSI request field in the triggering cell, the user terminal may use the PUSCH assigned to the reporting cell to transmit aperiodic CSI and user data.

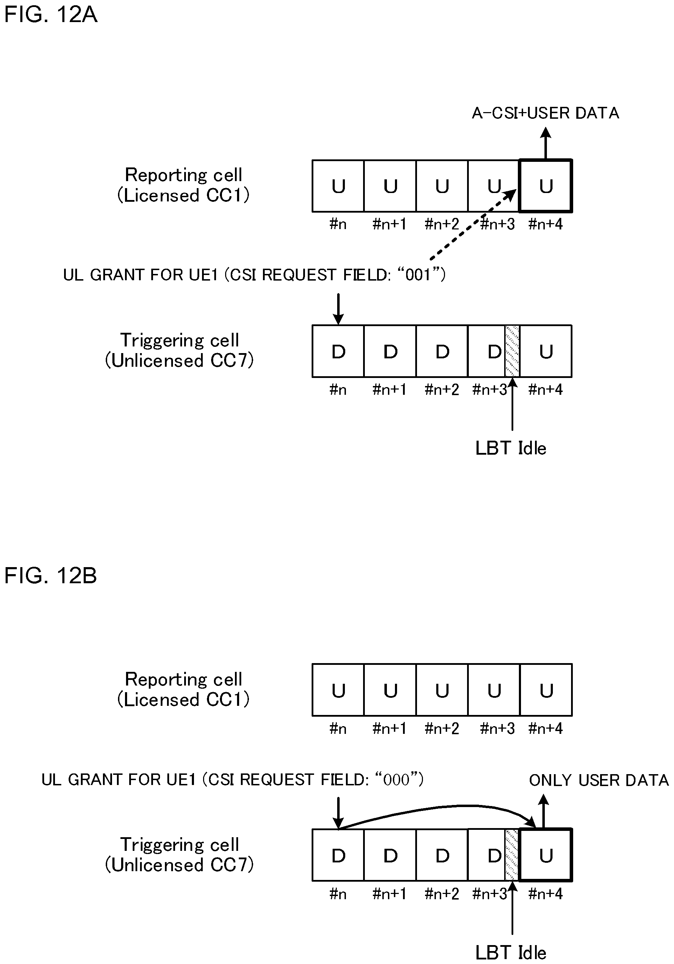

FIG. 12 is a diagram to show a second example of transmission of aperiodic CSI and user data according to the first example. In FIG. 12, the unlicensed CC 7 is the triggering cell, and the licensed CC 1 linked to the unlicensed CC 7 is the reporting cell.

As shown in FIG. 12A, when a UL grant including the CSI request field value "001" is transmitted in the unlicensed CC 7, which is the triggering cell, the radio base station secures the PUSCH resource of the licensed CC 1, which is linked to the unlicensed CC 7. The radio base station includes allocation information indicating the PUSCH resource allocated in the licensed CC 1 in the UL grant transmitted in the unlicensed CC 7.

In FIG. 12A, the user terminal receives a UL grant, including PUSCH allocation information pertaining to the licensed CC 1 and the CSI request field value "001" in subframe #n of the unlicensed CC 7. The user terminal transmits aperiodic CSI and user data of the unlicensed CC 7, which is the triggering cell, using the PUSCH allocated to the licensed CC 1, which is the reporting cell.

On the other hand, as shown in FIG. 12B, when a UL grant including the CSI request field value "000" is transmitted in the unlicensed CC 7, which is the triggering cell, the radio base station secures the PUSCH resource of the unlicensed CC 7. The radio base station includes allocation information indicating the PUSCH resource allocated in the unlicensed CC 7, in a UL grant that is transmitted in the unlicensed CC 7.

In FIG. 12B, in subframe #n of the unlicensed CC 7, the user terminal receives a UL grant including PUSCH allocation information pertaining to the unlicensed CC 7 and the CSI request field value "000." The user terminal transmits user data using the PUSCH allocated to the unlicensed CC 7, which is the triggering cell.

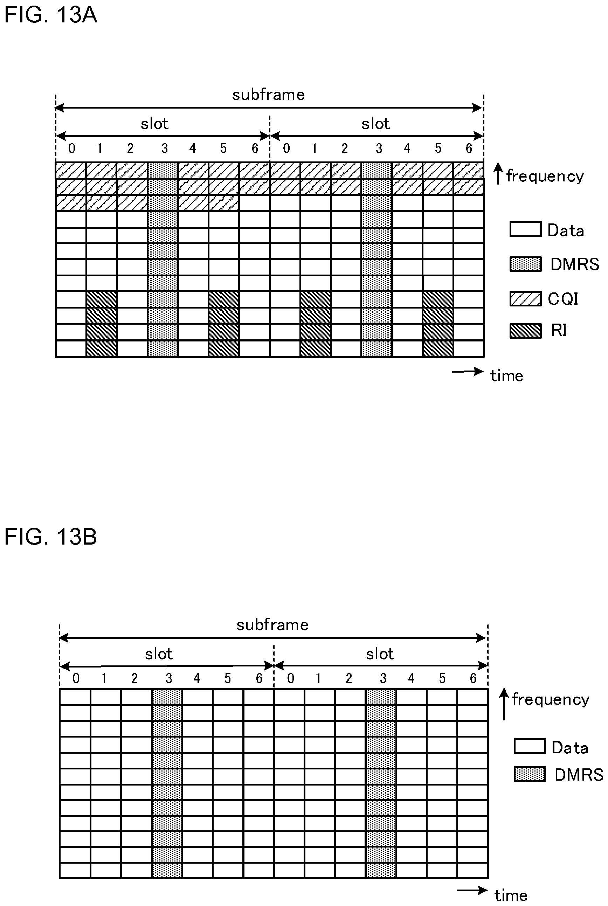

FIG. 13 is a diagram to show a second example of mapping of aperiodic CSI and user data according to the first example. FIG. 13A shows an example of mapping of aperiodic CSI and user data transmitted using the PUSCH of the reporting cell of FIG. 12A. FIG. 13B shows an example of mapping of user data transmitted using the PUSCH of the triggering cell of FIG. 12B.

As shown in FIG. 13A, when aperiodic CSI and user data are transmitted using the reporting cell's PUSCH, the user terminal may map aperiodic CSI to a part or all of the PUSCH resource (one or more PRBs) indicated by the allocation information in a UL grant received in the triggering cell.

For example, as shown in FIG. 13A, the user terminal may map the DMRS to all the REs in symbol #3 in each slot in the PUSCH resource, map the RI to REs of symbols #1 and #5 of each slot from one end of the frequency field, map the CQI to the remaining REs from the other end of the frequency field and map the user data to the remaining REs.

As shown in FIG. 13B, user data transmission using the PUSCH from the triggering cell is similar to that in FIG. 9B, so its description will be omitted.

As described above, according to the first example, a licensed CC is linked, as a reporting cell, to a triggering cell, which is an unlicensed CC, so that, even when a UL grant that requests transmission of aperiodic CSI is received in the unlicensed CC, the user terminal can transmit the aperiodic CSI using the PUSCH of the licensed CC, regardless of the result of LBT. Therefore, it is possible to prevent the delay of aperiodic CSI reporting caused by the result of LBT indicating a busy state.

Also, even when the load of the downlink control channel of the licensed CC (for example, the PDCCH (Physical Downlink Control Channel) and/or the EPDCCH (Enhanced PDCCH)) is high, it is possible to transmit a UL grant that requests transmission of aperiodic CSI using the downlink control channel of the unlicensed CC. For this reason, it is possible to prevent delays in aperiodic CSI reporting caused by overload of the downlink control channel of the licensed CC.

### (Second Example)

In a second example, a request for aperiodic CSI transmission using an unlicensed CC's PUSCH is invalidated. To be more specific, according to the second example, (1) the radio base station may remove the CSI request field from a UL grant that allocates the PUSCH of an unlicensed CC. Alternatively, (2) the radio base station may include a CSI request field value indicating that transmission of aperiodic CSI is not requested, in a UL grant allocating the PUSCH of an unlicensed CC. Alternatively, (3) regardless of what CSI request field value is included in a UL grant received in an unlicensed CC, the user terminal may ignore the CSI request field.

As described in (1) above, the radio base station may remove the CSI request field from a UL grant that allocates the PUSCH of an unlicensed CC. In this case, this CSI request field may be used for other purposes, or the size of the UL grant (DCI format) may be reduced.

Alternatively, as described in (2) above, the radio base station may include a CSI request field value indicating that transmission of aperiodic CSI is not requested, in a UL grant allocating the PUSCH of an unlicensed CC. In this case, for example, "000" is configured in a 3-bit CSI request field, "00" is configured in a 2-bit CSI request field, and "0" is configured in a one-bit CSI request field.

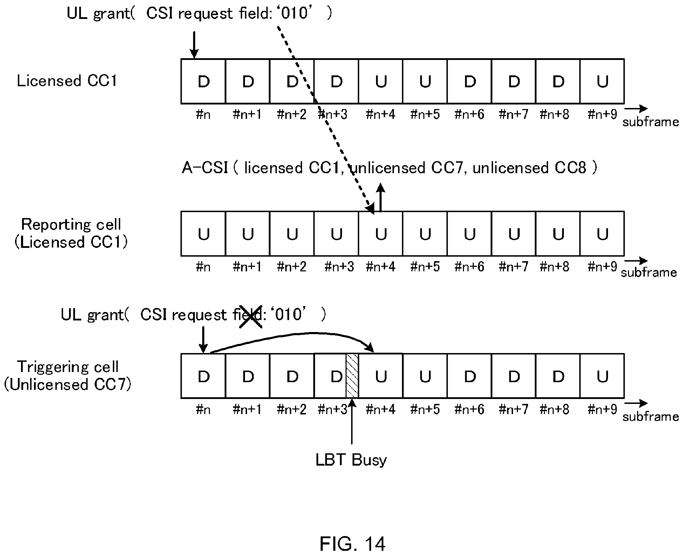

Alternatively, as in (3) above, regardless of what CSI request field value is included in a UL grant received in an unlicensed CC, the user terminal ignores the CSI request field. FIG. 14 is a diagram to show an example of aperiodic CSI (in case of (3) above) reporting according to the second example.

As shown in FIG. 14, when the CSI request field value "010" is included in a UL grant that allocates the PUSCH to the licensed CC 1, the user terminal transmits aperiodic CSI of the first process set (here, the licensed CC 1, the unlicensed CC 7 and the unlicensed CC 8) using the PUSCH of the licensed CC 1.

On the other hand, even when the CSI request field value "010" is included in a UL grant that allocates the PUSCH of the unlicensed CC 7, the user terminal does not transmit aperiodic CSI, regardless of the result of LBT before the PUSCH of the unlicensed CC 7 is transmitted. Thus, in the case of (3) above, regardless of the value of the CSI request field value in a UL grant that allocates the PUSCH of an unlicensed CC, the user terminal does not report aperiodic CSI in the unlicensed CC. Note that, if the result of LBT indicates an idle state, the user terminal may transmit user data using the PUSCH of the unlicensed CC 7.

As described above, according to the second example, the request for transmission of aperiodic CSI in an unlicensed CC is invalidated, so that the user terminal can transmit aperiodic CSI using only a licensed CC's PUSCH. Therefore, it is possible to prevent delay of aperiodic CSI reporting caused by the LBT result indicating a busy state.

### (Radio Communication System)

Now, the structure of the radio communication system according to the present embodiment will be described below. In this radio communication system, the radio communication methods according to each of the above-described examples are employed. Note that the radio communication methods according to each example may be used alone or in combination.

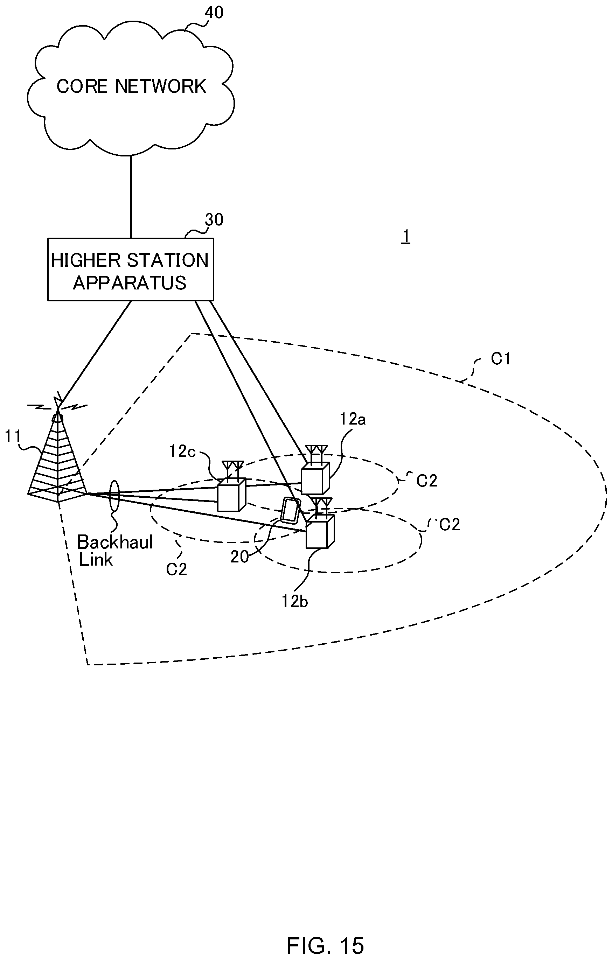

FIG. 15 is a diagram to show an example of a schematic structure of a radio communication system according to the present embodiment. The radio communication system 1 can adopt carrier aggregation (CA) and/or dual connectivity (DC) to group a plurality of fundamental frequency blocks (component carriers) into one, where the LTE system bandwidth constitutes one unit. Also, the radio communication system 1 has a radio base station (for example, an LTE-U base station) that is capable of using unlicensed bands.

Note that the radio communication system 1 may be referred to as "SUPER 3G," "LTE-A," (LTE-Advanced)," "IMT-Advanced," "4G" (4th generation mobile communication system), "5G" (5th generation mobile communication system), "FRA" (Future Radio Access) and so on.

The radio communication system 1 shown in FIG. 15 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2. For example, a mode may be possible in which the macro cell C1 is used in a licensed band and the small cells C2 are used in unlicensed bands (LTE-U). Also, a mode may be also possible in which part of the small cells is used in a licensed band and the rest of the small cells are used in unlicensed bands.

The user terminals 20 can connect with both the radio base station 11 and the radio base stations 12. The user terminals 20 may use the macro cell C1 and the small cells C2, which use different frequencies, at the same time, by means of CA or DC. For example, it is possible to transmit assist information (for example, the downlink signal configuration) related to a radio base station 12 (which is, for example, an LTE-U base station) that uses an unlicensed band, from the radio base station 11 that uses a licensed band to the user terminals 20. Here, a structure may be employed in which, when CA is used between a licensed band and an unlicensed band, one of the radio base stations (for example, the radio base station 11) controls the scheduling of licensed band cells and unlicensed band cells.

Note that it is equally possible to use a structure in which a user terminal 20 connects with a radio base station 12, without connecting with the radio base station 11. For example, it is possible to use a structure in which a radio base station 12 that uses an unlicensed band connects with the user terminals 20 in stand-alone. In this case, the radio base station 12 controls the scheduling of unlicensed band cells.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise. Also, it is preferable to configure radio base stations 10 that use the same unlicensed band on a shared basis to be synchronized in time.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. The PDSCH may be referred to as a "down link data channel." User data, higher layer control information and predetermined SIBs (System Information Blocks) are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. A CFI (Control Format Indicator), which indicates the number of OFDM symbols to use for the PDCCH, is communicated by the PCFICH. Retransmission control information for the PUSCH (HARQ-ACK) is transmitted by the PHICH. The EPDCCH is frequency-division-multiplexed with the PDSCH and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. The PUSCH may be referred to as an uplink data channel. User data (including higher layer control information) and/or uplink control information (UCI) are transmitted by the PUSCH. Also, UCI is transmitted by the PUCCH.

The UCI includes at least one of PDSCH retransmission control information (HARQ-ACK: Hybrid Automatic Repeat reQuest-Acknowledgment) and channel state information (CSI). Aperiodic CSI includes at least one of a rank indicator (RI), a channel quality indicator (CQI) and a precoding matrix indicator (PMI). CSI that is reported on an aperiodic basis is also referred to as "aperiodic CSI" (A-CSI).

In the radio communication systems 1, the cell-specific reference signal (CRS), the channel state information reference signal (CSI-RS), the demodulation reference signal (DMRS), the detection/measurement reference signal (DRS (Discovery Reference Signal) and so on are communicated as downlink reference signals. Also, in the radio communication system 1, the measurement reference signal (SRS: Sounding Reference Signal), the demodulation reference signal (DMRS) and so on are communicated as uplink reference signals. Note that the DMRSs may be referred to as a "user terminal-specific reference signal" (UE-specific Reference Signal). Also, the reference signals to be communicated are by no means limited to these.

### <Radio base station>

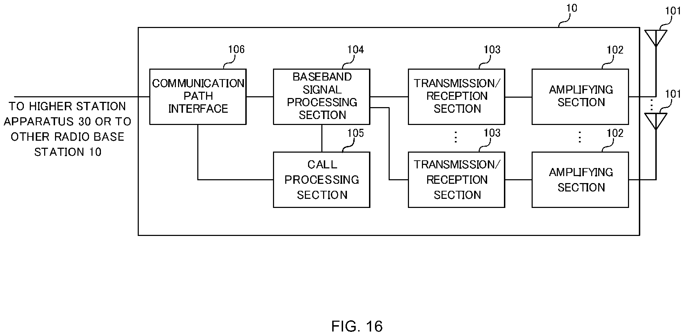

FIG. 16 is a diagram to show an example of an overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving sections 103. Furthermore, downlink control signals are also subjected to transmission processes such as channel coding and an inverse fast Fourier transform, and forwarded to each transmitting/receiving sections 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can transmit and receive uplink and/or downlink (hereinafter "uplink/downlink") signals in an unlicensed band cell (hereinafter also referred to as an "unlicensed CC") and/or a licensed band cell (hereinafter also referred to as a "licensed CC"). The transmitting/receiving sections 103 can be constituted by transmitters/receivers, transmitting/receiving circuits or transmitting/receiving devices that can be described based on common understanding of the technical field to which the present invention pertains. Note that a transmitting/receiving sections 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (for example, an interface in compliance with the CPRI (Common Public Radio Interface) m such as optical fiber, the X2 interface).

Note that the transmitting/receiving sections 103 transmit downlink signals to the user terminal 20 in an unlicensed CC (first cell) and/or a licensed CC (second cell). For example, in the licensed CC, the transmitting/receiving sections 103 may transmit DCI (UL Grant) including PUSCH allocation information of the licensed CC (self-carrier scheduling information) or PUSCH allocation information of the unlicensed CC(cross-carrier scheduling information). Further, in the unlicensed CC, the transmitting/receiving sections 103 may transmit a UL grant including PUSCH allocation information pertaining to the unlicensed CC. Also, when a CSI request field is included in the UL grant transmitted in the unlicensed CC, PUSCH allocation information pertaining to the licensed CC may be included in the UL grant.

Further, the transmitting/receiving section 103 receives an uplink signal from the user terminal 20 in the unlicensed CC and/or the licensed CC. For example, the transmitting/receiving sections 103 receive the PUSCH allocated in the unlicensed CC and/or the licensed CC by the UL grant.

For example, when a PUSCH-allocating UL grant is transmitted in an unlicensed CC, the transmitting/receiving sections 103 may receive the aperiodic CSI indicated by the CSI request field value in the UL grant by using the PUSCH of a licensed CC that is linked to this unlicensed CC. Also, when a UL grant to allocate the PUSCH is transmitted in a licensed CC, the transmitting/receiving sections 103 may receive the aperiodic CSI indicated by the CSI request field value in the UL grant by using the PUSCH of the licensed CC.

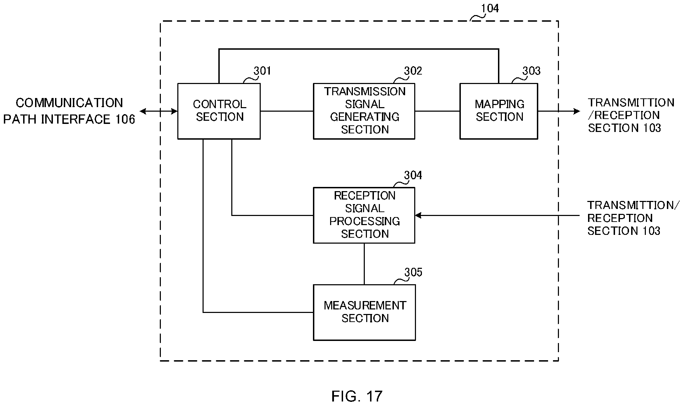

FIG. 17 is a diagram to show an example of a functional structure of a radio base station according to one embodiment of the present invention. Note that, although FIG. 17 primarily shows functional blocks that pertain to characteristic parts of the present embodiment, the radio base station 10 has other functional blocks that are necessary for radio communication as well. As shown in FIG. 17, the baseband signal processing section 104 at least has a control section (scheduler) 301, a transmission signal generation section 302, a mapping section 303, a received signal processing section 304 and a measurement section 305.

The control section (scheduler) 301 controls the whole of the radio base station 10. Note that, when a licensed band and an unlicensed band are scheduled with one control section (scheduler) 301, the control section 301 controls communication in the licensed band cells and the unlicensed band cells. For the control section 301, a controller, a control circuit or a control device that can be described based on common understanding of the technical field to which the present invention pertains can be used.

The control section 301, for example, controls the generation of downlink signals in the transmission signal generation section 302, the allocation of downlink signals by the mapping section 303, and so on. Furthermore, the control section 301 controls the signal receiving processes in the received signal processing section 304, the measurements of signals in the measurement section 305, and so on.

The control section 301 controls scheduling, generation, mapping, transmission, and the like of downlink signals (system information, DCI-transmitting PDCCH/EPDCCH, PDSCH, downlink reference signals, synchronization signals, etc.). Further, the control section 301 controls LBT (listening) by the measurement section 305, and controls the transmission signal generation section 302 and the mapping section 303 to transmit downlink depending on the result of LBT

Further, the control section 301 controls scheduling, reception, and the like of uplink signals (PUSCH, PUCCH, PRACH, uplink reference signal, etc.).

Further, the control section 301 controls aperiodic CSI reporting. To be more specific, the control section 301 controls the transmission signal generation section 302, the mapping section 303 and the transmitting/receiving sections 103 to generate and transmit a UL grant including a CSI request field value (transmission command information) for commanding transmission of desired aperiodic CSI.

Further, the control section 301 controls the reporting cell of the above aperiodic CSI. For example, the control section 301 may control the transmission signal generation section 302, the mapping section 303 and the transmitting/receiving sections 103 to generate and transmit higher layer control information that indicates the reporting cell that is linked to the triggering cell of the above periodic CSI (first example, see FIG. 5). Alternatively, the control section 301 may control the transmission signal generation section 302 so that the above-noted UL grant includes linkage information that indicates the reporting cell linked to the triggering cell of the aperiodic CSI (first example, see FIG. 6). Alternatively, the control section 301 may control the transmission signal generation section 302 to include a CSI request field value to indicate the reporting cell linked to the triggering cell of the aperiodic CSI, in the above-noted UL grant (first example, see FIG. 7).

Further, even when transmission of aperiodic CSI is not requested, the control section 301 may control the transmission signal generation section 302 so that a CSI request field value other than "000" (that is, a value that requests transmission of aperiodic CSI) is included in a UL grant for the user terminal 20, so that resources (for example, REs, PRBs, etc.) that are not used for aperiodic CSI from other user terminals 20 can be used to transmit the user data of the user terminal 20 (first example, see FIG. 10 and 11). In this case, the control section 301 controls the transmission signal generation section 302 so that a field (for example, one bit) indicating whether or not transmission of aperiodic CSI is actually requested to the user terminal 20 is added in the UL grant.

Further, the control section 301 may control the transmission signal generation section 302 so as not to include the CSI request field in a UL grant that allocates the licensed CC's PUSCH (second example). Alternatively, the control section 301 may control the transmission signal generation section 302 so that the CSI request field value "000," which indicates transmission of aperiodic CSI is not requested, is included in a UL grant which allocates the PUSCH of the licensed CC (second example).

Also, the control section 301 controls communication with the user terminal 20 based on the above aperiodic CSI. To be more specific, when a UL grant is transmitted in an unlicensed CC, communication with the user terminal 20 is controlled based on aperiodic CSI received in a licensed CC that is linked with the unlicensed CC.

The transmission signal generation section 302 generates downlink signals based on commands from the control section 301 and outputs these signals to the mapping section 303. The transmission signal generation section 302 can be constituted by a signal generator, a signal generating circuit or a signal generating device that can be described based on common understanding of the technical field to which the present invention pertains.

The transmission signal generation section 302 generates the above-noted UL grant based on a command from the control section 301, for example. Furthermore, the PDSCH is subjected to a coding process and a modulation process based on coding rates and modulation schemes that are determined based on CSI from each user terminal 20 and so on. Also, the transmission signal generation section 302 generates a DRS that includes a PSS, an SSS, a CRS, a CSI-RS and so on.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or a mapping device that can be described based on common understanding of the technical field to which the present invention pertains.

The received signal processing section 304 performs receiving processes (for example, demapping, demodulation, decoding and so on) of received signals that are input from the transmitting/receiving sections 103. Here, the received signals are, for example, a uplink signals transmitted from the user terminals 20. For the received signal processing section 304, a signal processor, a signal processing circuit or a signal processing device that can be described based on common understanding of the technical field to which the present invention pertains can be used.

The received signal processing section 304 outputs the decoded information acquired through the receiving processes to the control section 301. For example, when a PUSCH including aperiodic CSI is received, the aperiodic CSI is output to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or a measurement device that can be described based on common understanding of the technical field to which the present invention pertains.

The measurement section 305 executes LBT in a carrier where LBT is configured (for example, an unlicensed band) based on a command from the control section 301, and outputs the result of LBT (for example, judgment as to whether the channel state is idle or busy) to the control section 301.

The measurement section 305 also estimates the channel state using the DMRS and outputs the estimation result to control section 301. The control section 301 may control the receiving process of the PUSCH in the received signal processing section 304 based on the estimated channel state.

### <User terminal>

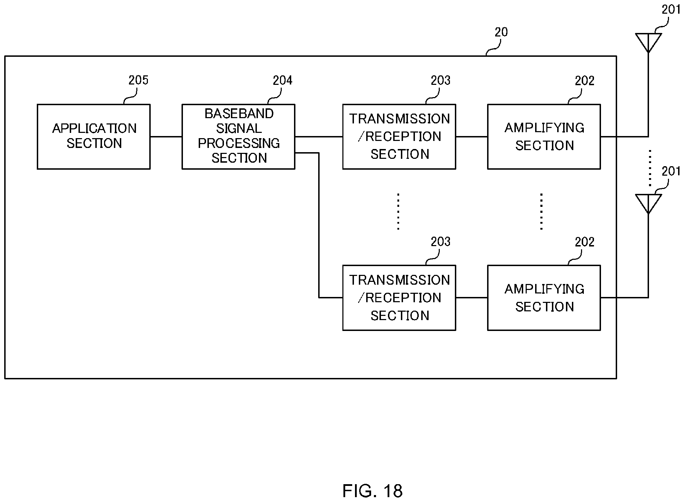

FIG. 18 is a diagram to show an example of an overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving sections 203 can transmit and receive uplink/downlink signals in unlicensed CCs and/or licensed CCs.

A transmitting/receiving section 203 can be constituted by a transmitters/receiver, a transmitting/receiving circuit or a transmitting/receiving device that can be described based on common understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving section 203. The baseband signal that is output from the baseband signal processing section 204 is converted into a radio frequency bandwidth in the transmitting/receiving sections 203. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 receive a downlink signals from the radio base station 10 in an unlicensed CC (first cell) and/or a licensed CC (second cell). For example, in the licensed CC, the transmitting/receiving sections 203 may receive a UL grant including PUSCH allocation information of the licensed CC (self-carrier scheduling information) or PUSCH allocation information of the unlicensed CC(cross-carrier scheduling information). Further, in the unlicensed CC, the transmitting/receiving sections 203 may receive a UL grant including PUSCH allocation information pertaining to the unlicensed CC. Also, when a CSI request field is included in the UL grant transmitted in the unlicensed CC, PUSCH allocation information pertaining to the licensed CC may be included in the UL grant.

Further, the transmitting/receiving sections 203 may receive higher layer control information indicating the reporting cell linked to the triggering cell of aperiodic CSI (first example, see FIG. 5). Alternatively, the transmitting/receiving sections 203 may receive a UL grant including linkage information that indicates the reporting cell linked to the triggering cell of aperiodic CSI (first example, see FIG. 6). Alternatively, the transmitting/receiving sections 203 may receive a UL grant including a CSI request field value that indicates the reporting cell linked to the triggering cell of aperiodic CSI (first example, see FIG. 7).

Further, the transmitting/receiving sections 203 transmit an uplink signal from the user terminal 20 in the unlicensed CC and/or the licensed CC. For example, the transmitting/receiving sections 203 transmit the PUSCH allocated to the unlicensed CC and/or the licensed CC in the UL grant.

For example, when a PUSCH-allocating UL grant is received in an unlicensed CC, the transmitting/receiving sections 203 may receive the aperiodic CSI indicated by the CSI request field value in the UL grant by using the PUSCH of the licensed CC linked with the unlicensed CC. Also, when a UL grant to allocate the PUSCH is transmitted in a licensed CC, the transmitting/receiving sections 203 may transmit the aperiodic CSI indicated by the CSI request field value in the UL grant by using the PUSCH of the licensed CC.

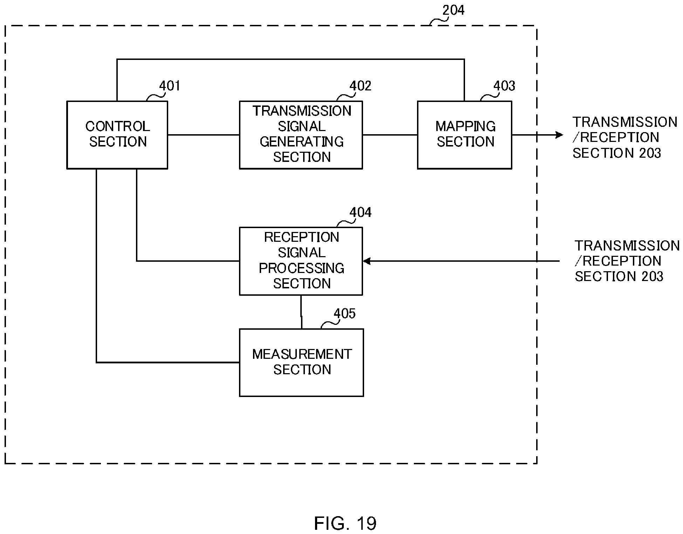

FIG. 19 is a diagram to show an example of a functional structure of a user terminal according to one embodiment of the present invention. Note that, although FIG. 19 primarily shows functional blocks that pertain to characteristic parts of the present embodiment, the user terminal 20 has other functional blocks that are necessary for radio communication as well. As shown in FIG. 19, the baseband signal processing section 204 provided in the user terminal 20 at least has a control section 401, a transmission signal generation section 402, a mapping section 403, a received signal processing section 404 and a measurement section 405.

The control section 401 controls the whole of the user terminal 20. For the control section 401, a controller, a control circuit or a control device that can be described based on common understanding of the technical field to which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurements of signals in the measurement section 405, and so on.

The control section 401 acquires downlink signals (PDCCH/EPDCCH, PDSCH, downlink reference signals, synchronization signals, etc.) transmitted from the radio base station 10 from the received signal processing section 404. The control section 401 controls the generation of uplink signals (for example, PUCCH, PUSCH, etc.) based on DCI included in the PDCCH/EPDCCH (downlink control signal) and the decoding result of the PDSCH (downlink data signal).

Furthermore, the control section 401 may control the transmission signal generation section 402 and the mapping section 403 to transmit uplink signals based on LBT results acquired in the measurement section 405.

Further, the control section 401 controls aperiodic CSI transmission using the PUSCH based on the CSI request field value (transmission command information) included in a UL grant. To be more specific, in an unlicensed CC, when the transmitting/receiving sections 203 receive a UL grant including a CSI request field value, the control section 401 transmits aperiodic CSI, based on this CSI request field value, using a licensed CC.

For example, in an unlicensed CC, when the transmitting/receiving sections 203 receive a UL grant including a CSI request field value, the control section 401 may control the transmission signal generation section 402, the mapping section 403 and the transmitting/receiving sections 203 to transmit aperiodic CSI in a licensed CC that is linked to the unlicensed CC according to the higher layer control information (first example, see FIG. 5).

Alternatively, in an unlicensed CC, when the transmitting/receiving sections 203 receive a UL grant including a CSI request field value, the control section 401 may control the transmission signal generation section 402, the mapping section 403, and the transmitting/receiving section 203 so that aperiodic CSI is transmitted in a licensed CC that is linked to the unlicensed CC according to linkage information (for example, linkage field value) included in the UL grant (first example, see FIG. 6).

Alternatively, in an unlicensed CC, when the transmitting/receiving sections 203 receive a UL grant including a CSI request field value, the control section 401 may control the transmission signal generation section 402, the mapping section 403, and the transmitting/receiving section 203 so that aperiodic CSI is transmitted in a licensed CC that is linked to the unlicensed CC according to the CSI request field value included in the UL grant (first example, see FIG. 7).

Further, in an unlicensed CC, when the transmitting/receiving sections 203 receive a UL grant including a CSI request field value, the control section 401 may control the transmission signal generating section 402, the mapping section 403, and the transmitting/receiving section 203 so that the aperiodic CSI indicated by the CSI request field value is transmitted using the PUSCH allocated to a licensed CC and user data is transmitted using the PUSCH allocated to the unlicensed CC (first example, see FIG. 8). In this case, the control section 401 may control the mapping section 403 to map the aperiodic CSI to all or a part of the PUSCH resource (allocated resource) in the licensed CC (first example, see FIG. 9 to 11).

Alternatively, in an unlicensed CC, when the transmitting/receiving sections 203 receive a UL grant including a CSI request field value, the control section 401 may control the transmission signal generation section 402, the mapping section 403, and the transmitting/receiving section 203 so that both the aperiodic CSI indicated by the CSI request field value and user data are transmitted using the PUSCH allocated in the licensed CC (first example, see FIGs. 12 and 13).

Also, when a UL grant includes an additional field (for example, one bit) indicating whether or not to actually request transmission of aperiodic CSI to the user terminal 20, the control section 401 may decide whether or not to transmit aperiodic CSI based on this additional field value. If the additional field value indicates that transmission of aperiodic CSI is not actually requested, the control section 401 maps user data to a predetermined resource (for example, a predetermined number of REs or PRBs), without transmitting the aperiodic CSI, even if the CSI request field value indicates a request for transmission of aperiodic CSI reporting (FIGs. 10 and 11). Note that the control section 401 may decide the predetermined resource based on the control size reported to the user terminal 20, for example, through higher layer signaling. The control size may be configured to be equal to or larger than the size of the resource where the aperiodic CSI of another user terminal 20 is mapped.

Also, even when a CSI request field value is included in a UL grant that allocates the PUSCH of an unlicensed CC, the control section 401 may cancel the transmission of aperiodic CSI based on the CSI request field value (second example, see FIG. 14). In the same case, the control section 401 may transmit user data using the PUSCH of an unlicensed CC allocated by the UL grant.

The control section 401 controls the received signal processing section 404 and the measurement section 405 to carry out RRM measurements and/or CSI measurements using measurement reference signals in an unlicensed CC. Note that RRM measurement may be performed by using the DRS. Further, the measurement reference signal may be either the CRS, the CSI-RS, the CSI or the CSI-RS included in the DRS, etc.

The transmission signal generation section 402 generates uplink signals (uplink control signals, uplink data signals, uplink reference signals and so on) based on commands from the control section 401, and outputs these signals to the mapping section 403. The transmission signal generation section 402 can be constituted by a signal generator, a signal generating circuit or a signal generating device that can be described based on common understanding of the technical field to which the present invention pertains. For example, when DCI (UL grant) addressed to the user terminal 20 is included in a downlink control signal from the radio base station 10, the transmission signal generation section 402 is commanded by the control section 401 to generate a PUSCH.

The mapping section 403 maps the uplink signals generated in the transmission signal generation section 402 to radio resources based on commands from the control section 401, and output the result to the transmitting/receiving sections 203. The mapping section 403 can be constituted by a mapper, a mapping circuit or a mapping device that can be described based on common understanding of the technical field to which the present invention pertains.

The received signal processing section 404 performs receiving processes (for example, demapping, demodulation, decoding and so on) of received signals that are input from the transmitting/receiving section 203. Here, the received signals are, for example, downlink signals transmitted from the radio base station 10. The received signal processing section 404 can be constituted by a signal processor, a signal processing circuit or a signal processing device that can be described based on common understanding of the technical field to which the present invention pertains. Also, the received signal processing section 404 can constitute the receiving section according to the present invention.

The received signal processing section 404 output the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals, the signals after the receiving processes and so on to the measurement section 405.

The measurement section 405 conducts measurements with respect to the received signals. The measurement section 405 can be constituted by a measurer, a measurement circuit or a measurement device that can be described based on common understanding of the technical field to which the present invention pertains.

The measurement section 405 may execute LBT in a carrier where LBT is configured (for example, an unlicensed band) based on commands from the control section 401. The measurement section 405 may output the results of LBT (for example, judgments as to whether the channel state is idle or busy) to the control section 401.

Also, the measurement section 405 measures RRM and CSI according to commands from the control section 401. For example, the measurement section 405 measures CSI using the measurement reference signal (the CRS, the CSI-RS, the CRS included in the DRS or the CSI-RS for CSI measurement arranged in the DRS transmission subframe). The measurement result is output to the control section 401 and transmitted from the transmitting/receiving section 203 using the PUSCH or the PUCCH.

### <Hardware structure>

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be implemented with one physically-integrated device, or may be implemented by connecting two physically-separate devices via radio or wire and by using these multiple devices.

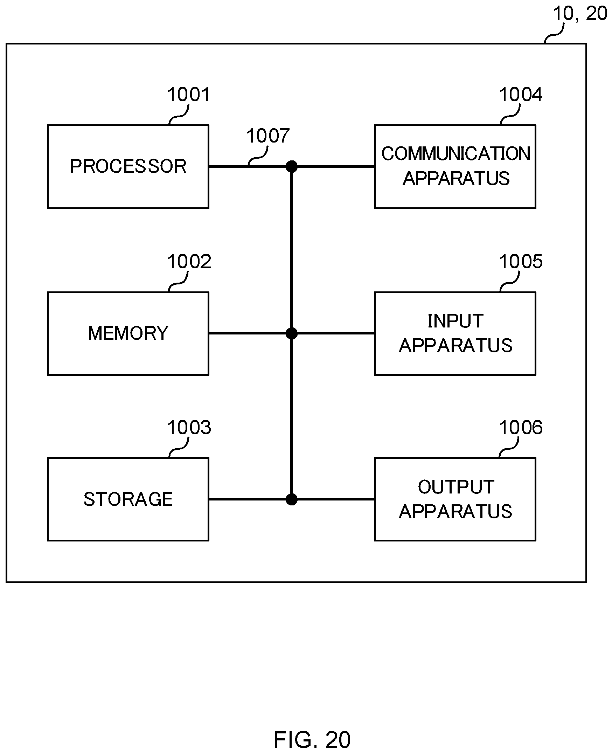

That is, the radio base stations, user terminals and so according to embodiments of the present invention may function as a computer that executes the processes of the radio communication method of the present invention. FIG. 20 is a diagram to show an example hardware structure of a radio base station and a user terminal according to an embodiment of the present invention. Physically, a radio base station 10 and a user terminal 20, which have been described above, may be formed as a computer apparatus that includes a processor 1001, a memory 1002, a storage 1003, a communication apparatus 1004, an input apparatus 1005, an output apparatus 1006 and a bus 1007

Note that, in the following description, the word "apparatus" may be replaced by "circuit," "device," "unit" and so on. Note that the hardware structure of the radio base station 10 and the user terminal 20 may be designed to include one or more of each apparatus shown in the drawings, or may be designed not to include part of the apparatuses.

Each function of the radio base station 10 and the user terminal 20 is implemented by reading predetermined software (programs) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU) including an interface with a peripheral device, a control device, a computing device, a register, and the like. For example, the above-described baseband signal process section 104 (204), call processing section 105 and so on may be implemented by the central processing apparatus 1001.

Further, the processor 1001 reads a program (program code), a software module or data from the storage 1003 and/or the communication device 1004 to the memory 1002, and executes various processes according to these. As for the programs, programs to allow the computer to execute at least part of the operations of the above-described embodiments may be used. For example, the control section 401 of the user terminals 20 may be stored in the memory 1002 and implemented by a control program that operates on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), a RAM (Random Access Memory) and so on. The memory 1002 may be referred to as a "register," a "cache," a "main memory" (primary storage apparatus) or the like. The memory 1002 can store executable programs (program codes), software modules, and the like for implementing the radio communication methods according to embodiments of the present invention.

The storage 1003 is a computer readable recording medium, and is configured with at least one of an optical disk such as a CD-ROM (Compact Disc ROM), a hard disk drive, a flexible disk, a magneto-optical disk, a flash memory and so on. The storage 1003 may be referred to as a "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, etc.). The output apparatus 1006 is an output device for allowing sending output to the outside (for example, a display, a speaker, etc.). Note that the input apparatus 1005 and the output apparatus 1006 may be provided in an integrated structure (for example, a touch panel).

Further, the respective devices such as the processor 1001 and the memory 1002 are connected by a bus 1007 for communicating information. The bus 1007 may be formed with a single bus, or may be formed with buses that vary between the apparatuses.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these hardware.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "cells," "frequency carriers," "carrier frequencies" and so on.

Further, a radio frame may be comprised of one or more periods (frames) in the time domain. Each of one or more periods (frames) constituting a radio frame may be referred to as a "subframe." Further, a subframe may be comprised of one or more slots in the time domain. Further, a slot may be comprised of one or more symbols (OFDM symbols, SC-FDMA symbols, etc.) in the time domain.

A radio frame, a subframe, a slot and a symbol all represent the time unit in signal communication. Radio frames, subframes, slots and symbols may be called by other names. For example, one subframe may be referred to as a "transmission time interval" (TTI), or a plurality of consecutive subframes may be referred to as a "TTI," and one slot may be referred to as a "TTI." That is, a subframe and a TTI may be a subframe (one ms) in existing LTE, may be a shorter period than one ms (for example, 1 to 13 symbols), or may be a longer period of time than one ms.

Here, a TTI refers to the minimum time unit of scheduling in wireless communication, for example. For example, in LTE systems, the radio base station schedules the allocation radio resources (such as the frequency bandwidth and transmission power that can be used by each user terminal) to each user terminal in TTI units. The definition of TTIs is not limited to this.

A TTI having a time duration of one ms may be referred to as a "normal TTI" (TTI in LTE Rel. 8 to 12), a "long TTI," a "normal subframe," a "long subframe," etc. A TTI that is shorter than a normal TTI may be referred to as a "shortened TTI," a "short TTI," a "shortened subframe," a "short subframe," or the like.

A resource block (RB) is a resource allocation unit in the time domain and the frequency domain, and may include one or a plurality of consecutive subcarriers in the frequency domain. Also, an RB may include one or more symbols in the time domain and may be one slot, one subframe or one TTI in length. One TTI and one subframe each may be comprised of one or more resource blocks. Note that an RB may be referred to as a "physical resource block" (PRB: Physical RB), a "PRB pair," an "RB pair," or the like.

Further, a resource block may be comprised of one or more resource elements (REs). For example, one RE may be a radio resource field of one subcarrier and one symbol.

Note that the structures of radio frames, subframes, slots, symbols and the like described above are merely examples. For example, configurations such as the number of subframes included in a radio frame, the number of slots included in a subframe, the number of symbols and RBs included in a slot, the number of subcarriers included in an RB, the number of symbols in a TTI, the symbol duration and the cyclic prefix (CP) length can be variously changed.

Also, the information and parameters described in this description may be represented in absolute values or in relative values with respect to a predetermined value, or may be represented in other information formats. For example, radio resources may be specified by predetermined indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

Also, software and commands may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation and microwaves), these wired technologies and/or wireless technologies are also included in the definition of communication media.

Further, the radio base station in this specification may be read by a user terminal. For example, each aspect/embodiment of the present invention may be applied to a configuration in which communication between a radio base station and a user terminal is replaced with communication of a plurality of user terminals (D2D: Device-to-Device). In this case, the user terminal 20 may have the functions of the radio base station 10 described above. In addition, wording such as "uplink" and "downlink" may be interpreted as "side." For example, an uplink channel may be interpreted as a side channel.

Likewise, a user terminal in this specification may be interpreted as a radio base station. In this case, the radio base station 10 may have the functions of the user terminal 20 described above.

The example s/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information), UCI (Uplink Control Information)), higher layer signaling (for example, RRC (Radio Resource Control) signaling, broadcast information (the MIB (Master Information Blocks) and SIBs (System Information Blocks) and so on) and MAC (Medium Access Control) signaling, other signals or combinations of these. Also, RRC signaling may be referred to as "RRC messages," and can be, for example, an RRC connection setup message, RRC connection reconfiguration message, and so on. Also, the MAC signaling may be reported, for example, by a MAC control element (MAC CE (Control Element)).

The examples/embodiments illustrated in this description may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2016-020013, filed on February 4, 2016, including the specification, drawings and abstract, is incorporated herein by reference in its entirety.

## Claims

1. A user terminal comprising:
a receiving section that receives downlink control information that allocates an uplink shared channel; and
a control section that controls transmission of channel state information using the uplink shared channel based on transmission command information included in the downlink control information,
wherein, when the receiving section receives the downlink control information in a first cell in which listening is performed prior to transmission, the control section determines, based on the transmission command information, that the channel state information is transmitted in a second cell, in which listening is not performed prior to transmission.

2. The user terminal according to claim 1, wherein:
the receiving section receives higher layer control information that indicates the second cell, which is linked to the first cell; and
the control section transmits the channel state information in the second cell indicated by the higher layer control information.

3. The user terminal according to claim 1, wherein:
the downlink control information includes linkage information indicating the second cell linked to the first cell; and
the control section transmits the channel state information in the second cell indicated by the linkage information.

4. The user terminal according to claim 1, wherein:
the transmission command information indicates the second cell linked to the first cell; and
the control section transmits the channel state information in the second cell indicated by the transmission command information.

5. The user terminal according to one of claims 1 to 4, wherein the control section transmits the channel state information using an uplink shared channel allocated in the second cell, and transmits user data using an uplink shared channel allocated in the first cell.

6. The user terminal according to claim 5, wherein the control section maps the channel state information to part or all of an allocated resource of the uplink shared channel in the second cell.

7. The user terminal according to one of claim 1 to claim 4, wherein the control section transmits both the channel state information and the user data by using an uplink shared channel allocated in the second cell.

8. A user terminal comprising:
a receiving section that receives downlink control information that allocates an uplink shared channel; and
a control section that controls transmission of channel state information using the uplink shared channel based on transmission command information included in the downlink control information,
wherein, when the receiving section receives the downlink control information in a first cell in which listening is performed prior to transmission, the downlink control information includes transmission command information that commands not to transmit the channel state information, or, even if transmission control information to command transmission of the channel state information is included in the downlink control information, the control section cancels transmission of the channel state information.

9. A radio base station comprising:
a transmission section that transmits downlink control information that allocates an uplink shared channel; and
a control section that controls communication with the user terminal based on channel state information that is received from the user terminal by using the uplink shared channel based on transmission command information included in the downlink control information,
wherein, when the transmission section transmits the downlink control information in a first cell in which listening is performed prior to transmission, the control section controls communication with the user terminal based on the channel state information received in a second cell where listening is not performed prior to transmission.

10. A radio communication method in a first cell in which listening is performed prior to transmission and/or a second cell in which listening is not performed prior to transmission, the radio communication method comprising the steps in which:
a user terminal receives downlink control information that allocates an uplink shared channel in the first cell; and
the user terminal transmits channel state information in the second cell, using the uplink shared channel, based on transmission command information included in the downlink control information.
